# EUROPÄISCHE PATENTSCHRIFT

(11) **EP 2 063 744 B1**
(45) Veröffentlichungstag und Bekanntmachung des Hinweises auf die Patenterteilung: **11.08.2010**
(21) Anmeldenummer: 07800172.4
(22) Anmeldetag: 07.09.2007
(51) Int. Cl.: A47J 31/40, B65D 85/804

(54) **TOPFFÖRMIGER, OBEN OFFENER BEHÄLTER**
POT-LIKE CONTAINER WHICH IS OPEN AT THE TOP
RÉCIPIENT EN FORME DE POT OUVERT VERS LE HAUT

(30) Priorität: 08.09.2006 AT 15072006
(43) Veröffentlichungstag der Anmeldung: 03.06.2009
(73) Patentinhaber: Litzka, Bernd, 1030 Wien (AT); Kreppel, Stefan, 1020 Wien (AT)
(72) Erfinder: Litzka, Bernd, 1030 Wien (AT); Kreppel, Stefan, 1020 Wien (AT)
(74) Vertreter: Patentanwälte Barger, Piso & Partner
(86) Internationale Anmeldenummer: PCT/AT2007/000427
(87) Internationale Veröffentlichungsnummer: WO 2008/028212

(56) Entgegenhaltungen:
- US-A- 5 424 083
- US-A- 5 840 189
- US-A1- 2005 034 605

## Beschreibung

Die Erfindung betrifft einen topfförmigen, oben offenen Behälter mit einem die Öffnung, die mit einem Deckel verschließbar ist, umschließenden, nach außen abstehenden flanschartigen Rand und einem an der Innenseite des Behälters angeordneten Filter.

Systeme zur Kapselung von Kaffeepulver in verschlossenen, druckdichten Behältern existieren bereits, wobei Zweck und Anwendung vor allem in der längerfristigen Erhaltung der Aromen in der verschlossnen Kapsel liegen und daher fertig abgekapselter Kaffee oder Tee dem Verbraucher angeboten wird. Eine weitere bekannte Anwendung betrifft fertig abgepackte Kaffeeportionen in druckdurchlässigen jedoch fertig verschlossenen Behältern, welche zum Verkauf einzeln oder in größeren Mengen aromadicht abgepackt werden. Kaffeemaschinen, welche zum Gebrauch von fertig verkapseltem Kaffeepulver geeignet sind, sind aus dem Stand der Technik bekannt.

In der EP 1243210 A1 sowie WO 02080744 wird ein Verfahren beschrieben, bei welchem eine druckdicht verschlossene Kapsel auf der einen Seite, durch Löcher eintretendes heißes Wasser unter Druck gesetzt wird und auf der gegenüberliegenden Seite druckbedingt nach außen aufgebläht wird und entlang einer Sollbruchstelle gegen einen Dorn aufplatzt um das angereicherte Wasser austreten zu lassen. Die Befüllung der Kapsel mit Kaffeepulver wird nicht dargestellt.

Die WO 02081327 A2 beschreibt eine geschlossene Kapsel, welche eine Membrane am Boden des Behälters aufweist, die durch einen externen Dorn einer Kaffeemaschine leicht durchstoßen wird. Die Kapsel kann nicht selbst befüllt werden.

Die EP 1273528 offenbart eine verschlossene Kapsel die zwischen zwei runden Filterschichten, welche am äußeren Umfang verschweißt sind, Feststoff enthält. Heißes Wasser kann bei dieser Anordnung durch die eine Filterschicht eindringen und bei geringem Überdruck durch den Feststoff und die zweite Filterschicht hindurch austreten. Die Kapsel kann nicht selbst befüllt werden.

In der SI 1190959 T ist eine druckdicht versiegelte Kapsel offenbart, welche am Kapselboden ein elastisches, rundes Ventil in Form einer durchlässigen Folie aufweist, welche mittig, sowie am kreisrunden Umfang der Folie mit dem Kapselboden fix verbunden ist. Die Kapsel kann nicht selbst befüllt werden.

Die JP 60045325 beschreibt eine druckdicht verschlossene Kapsel in abgestuft konischer Form mit einer einseitig druckempfindlichen Membrane. Die Membrane platzt bei einströmendem Heißwasser auf. Die Kapsel kann nicht selbst befüllt werden.

Die GB 1168470 offenbart eine dauerhaft versiegelte Kapsel, bei der sowohl das topfförmige Kapselgehäuse als auch die radial versiegelte Membrane perforiert wird, um den Durchfluss von Heißwasser durch beispielsweise Kaffe zu ermöglichen. Die Kapsel kann nicht selbst befüllt werden.

Die EP 0008015 B1 beschreibt ein Verfahren zur Herstellung von Kaffeekapseln mit Kaffee- oder Kaffeeersatzpulver sowie Aromazusätzen wie beispielsweise Kaffeeöl. Die Befüllung wird nicht beschrieben.

Aus den oben angeführten Dokumenten geht hervor, dass Kapseln mit topfförmig, beispielsweise konisch geformtem Behälter und druckempfindlicher Membrane aromahältigen Feststoff luftdicht versiegelt umschließen. Bisheriger Stand der Technik sind somit fertig versiegelte Kaffeekapseln. Dabei besteht das Problem, dass Kunden ausschließlich, vorab, in Kapseln abgefülltes Kaffeepulver des Kapselherstellers nutzen müssen und alternative Kaffeesorten vom Einsatz in derart geeigneten Kaffeemaschinen ausgeschlossen sind.

Die DE 1404799 A1 offenbart weiters einen vorzugsweise fertig befüllten und versiegelten Behälter, der allerdings auch als selbsttätig befüllbar beschrieben ist. Im Behälter ist eine poröse Trennscheibe eingelegt, die den Behälterinnenraum in zwei übereinander angeordnete Kammern unterteilt, von welchen die zwischen Behälterboden und Trennboden liegende untere Kammer mit Milchpulver und die darüber liegende Kammer mit Kaffepulver gefüllt sind. Am oberen Rand des Behälters ist ein ringförmiger Flansch vorgesehen, auf dem ein Deckel mittels Heißversiegelung luftdicht befestigt wird. Durch im Deckel hergestellte Einlassöffnungen wird Wasser in den Behälter eingeleitet und durch eine im Behälterboden hergestellte Auslassöffnung tritt es als Lösungsextrakt des Behälterinhaltes wieder aus.

Die DE 1989147 U offenbart einen als Kaffepackung dienenden Behälter, dessen Boden als poröser Filter oder als Sieb mit darüberliegenden Filter und dessen Deckel ebenfalls als Sieb ausgebildet ist. Zweckmäßiger Weise ist der Deckel zu weiterer Befüllung des dosenförmigen Behälters mit Kaffepulver abnehmbar oder mittels eines Scharnieres abklappbar direkt an der Behälterwand befestigt.

Die US 5840189 A1 offenbart einen oben offenen Behälter der eingangs genannten Art mit einem die Öffnung umschließenden, nach außen abstehenden flanschartigen Rand und einem an der Innenseite des Behälters angeordneten Filter, dessen unterer Teil in verflachter Form auf dem Boden des Behälters aufruht. Dieser Behälter ist allerdings als Einwegbehälter ausgeführt, der schon bei der Fabrikation mit Kaffee gefüllt und durch Siegelung luftdicht verschlossen wird.

Aufgabe der Erfindung ist es nun einerseits, individuell, je nach Wunsch mit Kaffee oder Tee befüllbare Kapseln zur Verfügung zu stellen, die in Kaffeemaschinen, welche zum Gebrauch von fertig verkapseltem Kaffeepulver geeignet sind, eingesetzt werden können. Anderseits soll auch der dazu verwendete Behälter so ausgebildet sein, dass der Vorgang der Befüllung möglichst einfach, sauber und bedienungsfreunlich durchführbar ist.

Die Lösung der gestellten Aufgabe besteht darin, einen topfförmigen, oben offenen Behälter der eingangs genannten Art mit einem die Öffnung umschließenden, nach außen abstehenden flanschartigen Rand und einem an der Innenseite des Behälters angeordneten Filter zur Verfügung zu stellen, der gemäß der Erfindung dadurch gekennzeichnet ist, dass der flanschartige Rand auf seiner Oberseite mit einer adhäsiven Oberfläche versehen ist, auf der lösbar eine ringförmige Abdeckung angeordnet ist, und dass im Bereich des oberen Randes des Behälters ein Deckel zum Verschließen des Behälters schwenkbar angeordnet ist.

Der Begriff "Filter" ist vorliegendenfalls im Zusammenhang mit der Erfindung dahingehend zu verstehen, dass eingeleitetes Wasser den Filter von außen her durchströmt und das im Filter angeordnete Kaffeepulver zur Kaffeebereitung durchsetzt und danach als Rückhaltemedium für die Feststoffe dient und so den Rückfluss des Kaffeeschlammes in die Düse der Kaffeemaschine verhindert.

Der Behälter hat eine an sich bekannte Form einer topfförmigen, beispielsweise abgestuft konischen allerdings oben offenen Kapsel, die an der offenen Seite einen flanschartigen Rand hat, welcher eine adhäsive Oberfläche aufweist, die durch eine leicht abnehmbare Abdeckung geschützt ist, wobei an der offenen Seite des Behälters ein Deckel angeordnet ist, welcher nach Befüllung des Hohlraumes mit aromahältigem Feststoff, wie beispielsweise gemahlenem Kaffee und Entfernen der leicht abnehmbaren Abdeckung, über die adhäsive Oberfläche manuell fixiert wird. Bedingt durch die ringförmige, abnehmbare Abdeckung ist die adhäsive Oberfläche derart geschützt, dass beim manuellen Befüllen des Hohlraumes kein Pulver festklebt.

Zur Erleichterung der Abnahme der Abdeckung von der adhäsiven Oberfläche des flanschartigen Randes ist die Erfindung gemäß einer weiteren Ausgestaltung dadurch gekennzeichnet, dass an der ringförmigen Abdeckung, vorzugsweise außerhalb des Bereichs des am Behälter schwenkbar angeordneten Deckels eine Abziehlasche vorgesehen ist. Die Verschwenkbarkeit des Deckels ist erfindungsgemäß über eine Knickkante gewährleistet, wobei es nicht der Anordnung eines Scharniers bedarf, wie es aus der DE 1989147 U bekannt ist, wo das Scharnier vom oberen Rand des Behälters nach außen abstehend angeordnet ist. Eine solche Ausführungsform macht die Einsetzbarkeit in Kaffeemaschinen, die herkömmlicher Weise zum Gebrauch von fertig verkapselten Kaffeepulver geeignet sind, unmöglich.

Entsprechend der erfindungsgemäßen Ausbildung des Behälters wird nach Befüllen der Kapsel die ringförmige Abdeckung entfernt und somit die adhäsive Oberfläche freigelegt. Der Deckel der Kapsel wird nun manuell auf die adhäsive Oberfläche geklappt und verschließt somit den Hohlraum. Die Befüllung der Kapsel kann vorzugsweise erst kurz vor der Zubereitung in Überdruckpressen wie beispielsweise Kaffeemaschinen erfolgen, um den Erhalt der Aromen, beispielsweise in der Originalverpackung des Kaffeeherstellers, sicherzustellen.

Nach einer weiteren Ausgestaltung der Erfindung ist der flanschartige Rand von einem profilierten Umfang begrenzt. Damit wird dem kreisrunden Deckel beim Umklappen und fixieren auf der adhäsiven Oberfläche eine Führung sowie eine seitliche Begrenzung gegeben.

Der an der Innenseite des topfförmigen Behälters angeordnete Filter erstreckt sich über den gesamten Boden und zumindest teilweise über die Seitenwand des Behälters. Dabei ist nach einem weiteren Merkmal der Erfindung der Filter im Abstand vom Boden des Behälters unter Bildung mindestens eines Zwischenraumes angeordnet. Dadurch ist gewährleistet, dass bei Herstellung einer oder mehrer Einlassöffnungen im Behälterboden z.B. mittels eines Dorns, für das Wasser keine Beschädigung des Filters erfolgen kann und diese Anordnung so den Rückfluss von Feststoffen aus der Kapsel zurück in die Kaffeemaschine verhindert. Dieser Zwischenraum zwischen Filter und Behälterboden ist leer oder es kann in diesem auch ein Vlies oder ähnliches poröses Material angeordnet sein.

Die verschlossene Kapsel ist geeignet in die Druckkammer von Kaffeemaschinen eingesetzt zu werden. Beim Einsetzten in die Kaffeemaschine wird die Kapselwand durchstoßen, um das Eintreten von heißem Wasser oder eines Dampf/Wasser-Gemisches zu ermöglichten. Das, durch den aromahältigen Feststoff dringende heiße Wasser verlässt über Öffnungen am Kapseldeckel die Kapsel. Die Öffnungen am Kapseldeckel können durch Durchstoßen von außen oder durch Aufplatzen des Deckels an Sollbruchstellen erfolgen.

Eine weitere vorteilhafte Eigenschaft des erfindungsgemäß ausgestalteten Behälters ist die Stapelbarkeit der Kapseln ineinander, wodurch eine deutliche Platzersparnis im Vergleich zu fertig versiegelten Kaffeekapseln erreicht wird und eine Schutzwirkung der offenen Kapseln gegen Deformation vor dem Befüllen der Kapsel resultiert.

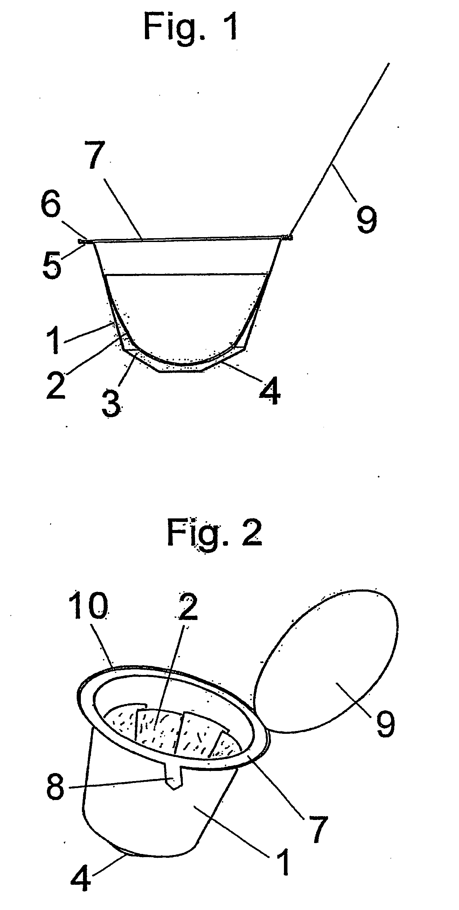

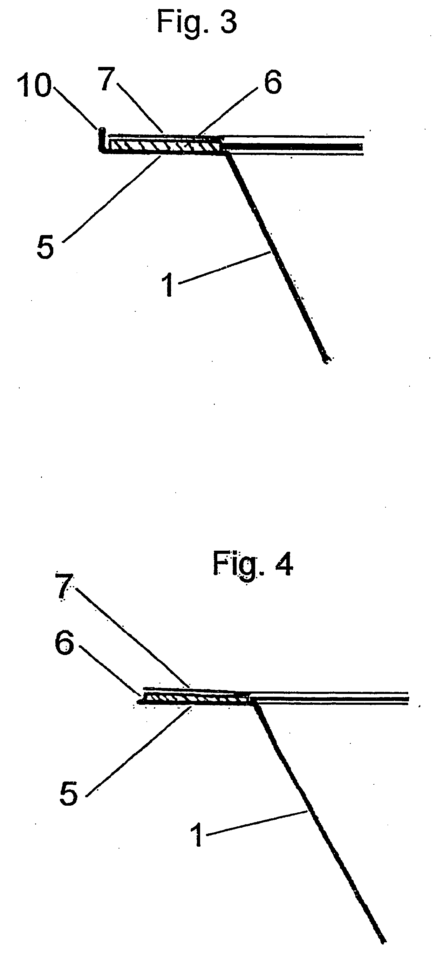

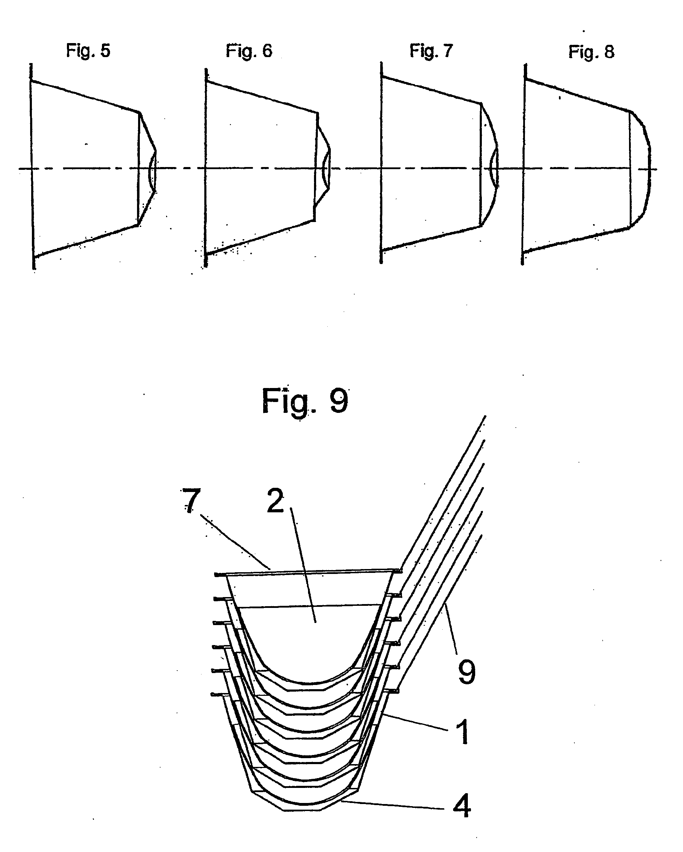

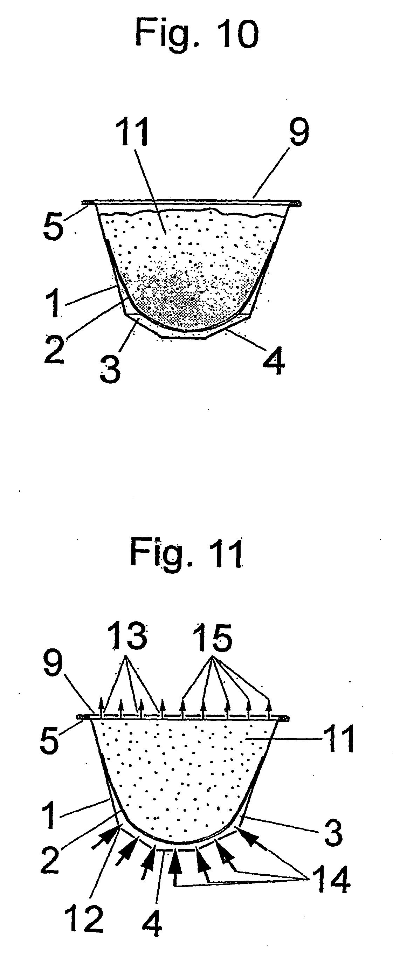

Die Erfindung ist anhand folgender Zeichnungen näher erläutert, wobei Fig. 1 eine offene, unbefüllte Kapsel im Schnitt von Fig. 2, Fig. 2 eine Schrägsicht der Kapsel selbst, Fig. 3 und Fig. 4 mögliche Details der Schnittdarstellung von Fig. 1, insbesondere des flanschartigen Randes und schließlich Fig. 5, Fig. 6, Fig. 7 sowie Fig. 8 mögliche Ausgestaltungsvarianten des topfförmigen Behälters darstellen, Fig. 9 die Stapelbarkeit der offenen, unbefüllten Kapseln darstellt, Fig. 10 eine befüllte und manuell verschlossene Kapsel zeigt und Fig. 11 den Eintritt von Dampf oder heißem Wasser in die Kapsel und den Austritt von aromatisiertem Wasser darstellt.
Fig. 1 zeigt einen topfförmigen Behälter 1, an dessen Innenseite ein Filter 2 derart angebracht ist, dass ein Zwischenraum 3 zwischen Filter 2 und dem Boden 4 des Behälters 1 besteht. Der Behälter 1 weist an der offenen Seite einen flanschartigen Rand 5 auf, der mit einer adhäsiven Oberfläche 6 versehen ist, welche selbst mit einer leicht abnehmbaren ringförmigen Abdeckung 7 versehen ist. Fig. 1 zeigt weiters einen offenen Deckel 9, welcher am flanschartigen Rand 5 fixiert ist. Der Deckel 9 kann nach Befüllen des Behälters 1 mit beispielsweise Kaffeepulver 11, wie auch in Fig. 10 dargestellt, und nach Entfernen der ringförmigen Abdeckung 7 manuell gegen die adhäsive Oberfläche 6 des flanschartigen Randes 5 gepresst werden und verschließt derart den Behälter 1.
Fig. 2 zeigt eine Schrägsicht des offenen unbefüllten Behälters 1 und der Anordnung wie in Fig. 1 dargestellt. An der Abdeckung 7 ist eine Abzielasche 8 vorgesehen, mit der die Abdeckung 7 von der adhäsiven Oberfläche 6 des flanschartigen Randes 5, wie auch in Fig. 1 dargestellt, entfernbar ist. Die Abzielasche 8 ist am äußeren Umfang der ringförmigen Abdeckung 7, wie in Fig. 2 gezeigt, vorzugsweise außerhalb des Bereiches des am Behälter 1 schwenkbar befestigten Deckels 9 angeordnet.
Fig. 3 zeigt den flanschartigen Rand 5, die adhäsive Oberfläche 6 sowie die abnehmbare ringförmige Abdeckung 7 und den profilierten Umfang 10, welcher beim Verschließen des Behälters 1 mit dem Deckel 9 als Führung sowie seitliche Begrenzung dient.
Fig. 4 zeigt dieselbe Anordnung wie in Fig. 3 dargestellt, jedoch in einer anderen Ausführungsform ohne Profil 10.
Fig. 5, Fig. 6, Fig.7 und Fig. 8 stellen jeweils mögliche Ausgestaltungsvarianten des topfförmigen Behälters 1 in abgestuft konischer, abgestuft kugelförmiger Form, sowie unterschiedlichen Kombinationen von Kegel- und Kugelformen dar.
Fig. 9 zeigt die Stapelbarkeit von offenen Kapseln, wobei jeweils ein Behälter 1 in den Filter 2 der ineinander gestapelten Kapseln ragt. Die Kapseln werden derart zueinander ausgerichtet, dass Deckel 9 aller ineinander gestapelten Kapseln übereinander liegen. Durch die Stapelbarkeit der Kapseln können somit deutlich mehr Kapseln in eine Verkaufsverpackung geschlichtet werden, als dies bei fertig versiegelten Kaffeekapseln der Fall ist. Weiters werden die Behälter 1, Filter 2 und Deckel 9 durch das

Ineinanderstapeln gegen Deformation der Kapseln vor dem Befüllen und manuellen Verschließen geschützt.

Fig. 10 stellt eine, mit beispielsweise Kaffeepulver 11 fertig befüllte Kapsel dar, wobei der Zwischenraum 3 und der verschlossene Deckel 9 am flanschartigen Rand 5 erkennbar ist. Im Gegensatz zu fertig versiegelten Kapseln steht die erfindungsgemäße Anordnung nicht unter Überdruck, weshalb der Deckel 9 keine Wölbung nach Außen hin aufweist und die adhäsive Oberfläche 6 keine höheren Belastungen aufnehmen muss.

In Fig. 11 wird gezeigt, dass der Behälter 1 am Boden 4 an beliebigen Stellen 12 beim Einsetzen in die Druckkammer einer Kaffeemaschine durchstoßen wird und heißes Wasser oder ein Dampf/Wasser-Gemisch 14 in den Zwischenraum 3 eindringt. Das heiße Wasser 14 durchdringt das Kaffeepulver 11 und tritt durch im Deckel 9 hergestellte Öffnungen 13 als aromatisierte Lösung 15 aus der Kapsel aus. Die Öffnungen 13 können wie in bereits bekannten Gestaltungen von Kaffeemaschinen durch, von außen einwirkende Kanten, oder durch druckbedingtes Aufplatzen des Deckels 9 entlang von Sollbruchstellen erfolgen. Dabei ergeben sich kleine widerhakenartige Risskanten, die eine Siebwirkung erzeugen, um Feststoffe zurückzuhalten. Dabei ist ein vorteilhafter Effekt bei dieser Anordnung, dass die siebartigen Risskanten am Deckel zu einem Schaum-Effekt beim Kaffee führen. Weiters ist erkennbar, dass der Zwischenraum 3, weitgehend frei von Kaffeepulver 11 bleibt und somit ein Rückfluss von Feststoffteilchen über die Öffnungen 12 verhindert wird.

## Patentansprüche

1. Topfförmiger, oben offener Behälter mit einem die Öffnung, die mit einem Deckel verschließbar ist, umschließenden, nach außen abstehenden flanschartigen Rand und einem an der Innenseite des Behälters angeordneten Filter, **dadurch gekennzeichnet, dass** der flanschartige Rand (5) auf seiner Oberseite mit einer adhäsiven Oberfläche (6) versehen ist, auf der lösbar eine ringförmige Abdeckung (7) angeordnet ist, und dass im Bereich des oberen Randes des Behälters (1) ein Deckel (9) zum Verschließen des Behälters (1) schwenkbar angeordnet ist.

2. Behälter nach Anspruch 1, **dadurch gekennzeichnet, dass** der Deckel (9) über eine Knickkante verschwenkbar ist.

3. Behälter nach Anspruch 1 oder 2, **dadurch gekennzeichnet, dass** an der ringförmigen Abdeckung (7), vorzugsweise außerhalb des Bereichs des am Behälter (1) schwenkbar angeordneten Deckels (9) eine Abziehlasche (8) vorgesehen ist.

4. Behälter nach Anspruch 1, **dadurch gekennzeichnet, dass** der flanschartige Rand (5) von einem profilierten Umfang (10) begrenzt ist.

5. Behälter nach Anspruch 1, **dadurch gekennzeichnet, dass** der Filter (2) im Abstand vom Boden (4) des Behälters (1) unter Bildung mindestens eines Zwischenraumes (3) angeordnet ist.

## Claims

1. Pot-like container which is open at the top and has an outwardly projecting flange-like rim enclosing the opening, which can be closed by a lid, and also has a filter arranged on the inside of the container, **characterized in that** the flange-like rim (5) is provided, on its top side, with an adhesive surface (6) on which an annular covering (7) is arranged in a releasable manner, and **in that** a cover (9) for closing the container (1) is arranged in a pivotable manner in the region of the top rim of the container (1).

2. Container according to Claim 1, **characterized in that** the lid (9) can be pivoted via an edge of inflection.

3. Container according to Claim 1 or 2, **characterized in that** a pull-off tab (8) is provided on the annular covering (7), preferably outside the region of the lid (9), which is arranged in a pivotable manner on the container (1).

4. Container according to Claim 1, **characterized in that** the flange-like rim (5) is bounded by a profiled circumference (10).

5. Container according to Claim 1, **characterized in that** the filter (2) is spaced apart from the base (4) of the container (1), at least one interspace (3) being formed in the process.

## Revendications

1. Récipient en forme de pot, ouvert vers le haut, avec un bord du genre collet entourant l'ouverture en dépassant vers l'extérieur, l'ouverture pouvant être fermée par un couvercle, et avec un filtre disposé sur la face intérieure du récipient, **caractérisé en ce que** le bord du genre collet (5) est pourvu sur le dessus d'une surface adhésive (6) sur laquelle un élément de recouvrement annulaire (7) est disposé de manière amovible, et **en ce qu'**un couvercle (9) destiné à fermer le récipient (1) est disposé à pivotement dans la région du bord supérieur du récipient (1).

2. Récipient selon la revendication 1, **caractérisé en ce que** le couvercle (9) est pivotant au moyen d'une arête de flexion.

3. Récipient selon la revendication 1 ou 2, **caractérisé en ce qu'**une languette de déchirement (8) est disposé sur l'élément de recouvrement annulaire (7), de préférence à l'extérieur de la région du couvercle (9) disposé à pivotement sur le récipient (1).

4. Récipient selon la revendication 1, **caractérisé en ce que** le bord du genre collet (5) est délimité par un pourtour profilé (10).

5. Récipient selon la revendication 1, **caractérisé en ce que** le filtre (2) est disposé à distance du fond (4) du récipient (1) en formant au moins un espace intermédiaire (3).
